# EUROPÄISCHE PATENTANMELDUNG

(11) **EP 4 134 191 A1**
(43) Veröffentlichungstag der Anmeldung: **15.02.2023**
(21) Anmeldenummer: 21190574.0
(22) Anmeldetag: 10.08.2021
(51) Int. Cl.: B23B 5/16, B23K 11/30, C22C 29/02, C22C 19/07, C23C 14/35

(54) **SCHNEIDE ZUM BEARBEITEN VON PUNKTSCHWEISSELEKTRODEN, ELEKTRODENFRÄSWERKZEUG ZUM BEARBEITEN VON PUNKTSCHWEISSELEKTRODEN UND ELEKTRODENFRÄSER**

(71) Anmelder: Lutz Precision, s.r.o., 84104 Bratislava (SK)
(72) Erfinder: SPERBER, Rudolf, Bratislava 841 04 (SK)
(74) Vertreter: Grünecker Patent- und Rechtsanwälte PartG mbB

(57) **Zusammenfassung**

Die Erfindung betrifft eine Schneide (1, 8, 15, 22, 28, 34, 54, 55, 56) zum Bearbeiten von Punktschweißelektroden, wobei die Schneide mindestens eine Fräskante (2, 9, 16, 23, 24, 29, 30, 35, 36, 40, 43, 44) zum Bearbeiten einer Punktschweißelektrode umfasst. Ein Schneidenmaterial der Schneide umfasst ein Wolframcarbid-Kobalt-Hartmetall. Weiter betrifft die Erfindung ein Elektrodenfräswerkzeug zum Bearbeiten von Punktschweißelektroden mit mindestens einer derartigen Schneide. Zudem umfasst die Erfindung einen Elektrodenfräser mit einem derartigen Elektrodenfräswerkzeug und einem Motor und/oder einem Getriebe zum Antrieb des Elektrodenfräswerkzeugs.

## Beschreibung

Die vorliegende Erfindung betrifft eine Schneide zum Bearbeiten von Punktschweißelektroden gemäß dem Oberbegriff des Anspruchs 1, ein Elektrodenfräswerkzeug zum Bearbeiten von Punktschweißelektroden gemäß Anspruch 13 und einen Elektrodenfräser gemäß Anspruch 15.

### Stand der Technik

Aus dem Gebiet der Automobilherstellung ist bekannt Schweißroboter mit Schweißzangen einzusetzen, um Blechteile fest miteinander zu verbinden. Beim Schweißvorgang drückt die Schweißzange von zwei gegenüberliegenden Seiten jeweils zwei oder mehrere Blechteile aufeinander, wobei durch an den beiden Enden der Schweißzange angebrachten Punktschweißelektroden ein elektrischer Strom fließt, sodass die Blechteile punktgenau miteinander verschweißt werden. Die Schließkraft einer Punktschweißzange während des Schweißvorgangs kann in einem Bereich von 3 bis 8 kN liegen. Nach ungefähr 100 bis 300 Schweißvorgängen können die Punktschweißelektroden derart abgenutzt bzw. mit Schweißresten belegt sein, dass kein zuverlässiger Schweißvorgang mehr möglich ist.

Um die abgenützten bzw. mit Schweißresten belegten Punktschweißelektroden wieder in eine der ursprünglichen Form ähnliche Form zu bringen, werden die Kappen der Punktschweißelektroden mit Hilfe eines Elektrodenfräsers (beziehungsweise Kappenfräsers) bearbeitet. Für die Bearbeitung dieser Punktschweißelektroden, die aus relativ weichem Kupfer bestehen, reicht es zumeist aus, weniger als 0,1 mm oder weniger als 0,3 mm Material von den Kappen der Punktschweißelektrode beim Bearbeiten (Fräsen) abzutragen. Der Elektrodenfräser kann zum Bearbeiten eine oder mehrere Schneiden umfassen.

### Aufgabe

Ausgehend vom bekannten Stand der Technik besteht die zu lösende technische Aufgabe darin, eine Schneide und ein Elektrodenfräswerkzeug zum Bearbeiten von Punktschweißelektroden und einen Elektrodenfräser zur Verfügung zu stellen, die ein gutes Fräsergebnis bei guter Haltbarkeit der Schneide gewährleisten.

### Lösung

Diese Aufgabe wird erfindungsgemäß durch die Schneide zum Bearbeiten von Punktschweißelektroden nach Anspruch 1, das Elektrodenfräswerkzeug zum Bearbeiten von Punktschweißelektroden nach Anspruch 13 und den Elektrodenfräser nach Anspruch 15 gelöst. Weitere Ausführungsformen und Weiterbildungen sind in den jeweiligen abhängigen Ansprüchen erfasst. Die erfindungsgemäße Schneide zum Bearbeiten von Punktschweißelektroden umfasst mindestens eine Fräskante zum Bearbeiten einer Punktschweißelektrode, wobei ein Schneidenmaterial der Schneide ein Wolframcarbid-Kobalt-Hartmetall umfasst.

Durch die Verwendung des Wolframcarbid-Kobalt-Hartmetalls kann die Lebensdauer der Schneide um bis zu 30% im Vergleich zu herkömmlichen Schneiden, die zum Bearbeiten von Punktschweißelektroden verwendet werden, erhöht werden.

Das Bearbeiten von Punktschweißelektroden kann ein Fräsen einer Kappe einer Punktschweißelektrode umfassen.

Das Wolframcarbid-Kobalt-Hartmetall kann Wolframcarbid in einem Bereich von 85 bis 94 Gewichts-% und kann Kobalt in einem Bereich von 15 bis 6 Gewichts-% umfassen.

Die hier und im Weiteren angegebenen Grenzwerte von Bereichen können jeweils als in den Wertebereich miteingeschlossen angesehen werden.

Eine Korngröße des Wolframcarbid-Kobalt-Hartmetalls kann in einem Bereich von 0,4 µm bis 2,5 µm liegen. Beispielsweise kann sich eine höhere Querbruchfestigkeit durch Verwendung einer kleineren Korngröße ergeben.

Das Wolframcarbid ein oder mehrere Fremdcarbide bis zu 1 Gewichts-% umfassen kann.

Eine Dichte des Wolframcarbid-Kobalt-Hartmetalls kann in einem Bereich von 13,5 g/cm³ bis 15 g/cm³ liegen.

Eine Rockwell-Härte kann in einem Bereich von 86 HRA bis 95 HRA liegen. Dem Fachmann ist bekannt, dass die Härtebestimmung nach Rockwell Skala A mit einem Diamantkegel mit 120° Spitzenwinkel, einer Prüfvorkraft von 98,0665 N und einer Prüfzusatzkraft von 490,3325 N durchgeführt wird.

Eine Vickers-Härte kann in einem Bereich von 1040 HV30 bis 1950 HV30 liegen. Dem Fachmann ist bekannt, dass bei dem Härtesymbol HV30 der Vickers-Härteprüfung eine Prüfkraft von 294,2 N verwendet wird. Dies kann dem konventionellen Härtebereich zugeordnet werden.

Eine Querbruchfestigkeit kann in einem Bereich von 2500 N/mm² bis 4500 N/mm² liegen. Die Querbruchfestigkeit kann mit einer Biegebruchfestigkeitsprüfung, wie einem Dreipunkt-Biegeversuch, ermittelt werden. Hartmetall, wie das Wolframcarbid-Kobalt-Hartmetall, ist im Allgemeinen ein sprödes Metall, dessen Festigkeit von inhärenten Defekten beeinflusst werden kann. Die Biegefestigkeit kann beim Wolframcarbid-Kobalt-Hartmetall durch ein Erhöhen des Anteils des Kobaltanteils und Verwendung einer kleineren Korngröße des Wolframcarbid-Kobalt-Hartmetalls erhöht werden.

Die mindestens eine Fräskante kann mit einem Titan-Bor-basierten Schichtwerkstoff beschichtet sein. Der Titan-Bor-basierte Schichtwerkstoff kann Titanborid (TiB₂) umfassen. Es kann vorgesehen sein, dass eine, mehrere oder alle der mindestens einen Fräskante mit dem Titan-Bor-basierten Schichtwerkstoff beschichtet sind. Eine Dicke der Beschichtung kann in einem Bereich von 1 µm bis 3 µm liegen. Beispielsweise kann eine Dicke von 2 ± 0,7 µm vorgesehen sein. Eine Mikrohärte der Beschichtung kann in einem Bereich von 4600 HV0,05 bis 5100 HV0,05 liegen. Dem Fachmann ist bekannt, dass bei dem Härtesymbol HV0,05 der Vickers-Härteprüfung eine Prüfkraft von 0,4903 N verwendet wird. Dies kann dem Mikrohärtebereich zugeordnet werden. Alternativ kann die Schneide mit einem Titan-Bor-basierten Schichtwerkstoff beschichtet sein. Der Titan-Bor-basierte Schichtwerkstoff kann Titanborid (TiB₂) umfassen. Eine Dicke der Beschichtung kann in einem Bereich von 1 µm bis 3 µm liegen. Beispielsweise kann eine Dicke von 2 ± 0,7 µm vorgesehen sein. Beispielsweise kann die Dicke im Bereich der mindestens einen Fräskante größer (2 ± 0,7 µm) sein als im restlichen Bereich der Schneide (1,5 ± 0,7 µm). Eine Mikrohärte der Beschichtung kann in einem Bereich von 4600 HV0,05 bis 5100 HV0,05 liegen. Der Titan-Bor-basierte Schichtwerkstoff kann mittels eines Hochenergieimpulsmagnetronsputter-Verfahrens, HiPIMS-Verfahrens, auf das Wolframcarbid-Kobalt-Hartmetall aufgebracht werden oder aufgebracht worden sein. Das HiPIMS-Verfahren ist zum Aufbringen von Dünnschichten geeignet.

Zumindest eine der mindestens einen Fräskante kann an einer oder an mehreren Stellen durch eine oder mehrere Aussparungen unterbrochen sein. Bei Verwendung einer derartigen Fräskante können beim Fräsen an Stellen der Aussparungen ringförmige Wülste an den Punktschweißelektroden entstehen. Beispielsweise kann dadurch das Material der Punktschweißelektrode beim Fräsen dünner abgetragen werden im Vergleich zu einer Fräskante ohne eine oder ohne mehrere Aussparungen. Dadurch kann die Lebensdauer einer Punktschweißelektrode um ein Mehrfaches erhöht. Außerdem führt die Verwendung von Fräskanten mit Aussparungen dazu, dass beim Fräsen kleinere Späne bzw. Fräspartikel erzeugt werden können. Die Gefahr eines Zusetzens eines Fräswerkzeuges mit abgefrästem Material kann deutlich reduziert werden. Weiter ermöglichen die ringförmigen Wülste, die beim Fräsen mit dieser Fräskante entstehen, eine genauere Positionierung der Kappe der Punktschweißelektrode in einem Elektrodenfräswerkzeug, da die Wülste auf der Punktschweißelektrode und die Aussparungen etwas ineinandergreifen.

Eine Breite der Aussparungen kann im Bereich oberhalb eines Minimalwerts von 30 µm bis 1200 µm und/oder unterhalb eines Maximalwerts von 40 µm bis 1400 µm liegen; und/oder eine Tiefe der Aussparungen kann im Bereich oberhalb eines Minimalwerts von 30 µm bis 300 µm und/oder unterhalb eines Maximalwerts von 40 µm bis 400 µm liegen; und/oder ein Abstand zwischen benachbarten Aussparungen kann im Bereich von oberhalb eines Minimalwerts von 0,5 mm bis 9 mm und/oder unterhalb eines Maximalwerts von 1 mm bis 10 mm liegen.

Alle Aussparungen einer Fräskante können gleiche Abmessungen besitzen, oder wenigstens eine Aussparung kann unterschiedliche Abmessungen aufweisen als eine andere Aussparung; und/oder die Abstände zwischen benachbarten Aussparungen können jeweils gleich sein, oder die Abstände können zumindest teilweise unterschiedlich sein; und/oder pro Fräskante kann eine Anzahl der Aussparungen mehr als, weniger als oder gleich 1, 2, 3, 4, 5, 6, 7 oder 8 betragen. Die Abmessungen können mindestens eines von Breite der Aussparungen, Tiefe der Aussparungen und Abstand zwischen benachbarten Aussparungen umfassen.

Die Aussparungen können einen rechteckigen, abgerundeten oder halbrunden Querschnitt aufweisen. So kann eine Reduktion des Materialabtrages von einer Punktschweißelektrode beim Fräsvorgang mittels der Schneide ermöglicht werden.

Die Schneide kann einseitig oder zweiseitig ausgebildet sein. Eine einseitig ausgebildete Schneide weist die mindestens eine Fräskante zum Bearbeiten einer Punktschweißelektrode auf einer Seite auf. Eine zweiseitig ausgebildete Schneide weist die mindestens eine Fräskante zum Bearbeiten einer Punktschweißelektrode an zwei in entgegengesetzte Richtungen weisenden Seiten auf. Im Fall einer zweiseitig ausgebildeten Schneide können zwei Punktschweißelektroden (einer Schweißzange) gleichzeitig bearbeitet werden können.

Ein Elektrodenfräswerkzeug zum Bearbeiten von Punktschweißelektroden kann mindestens eine Schneide, wie oben oder weiter unten beschrieben, umfassen.

Das Elektrodenfräswerkzeug kann eine oder zwei Aufnahmepfannen für die Punktschweißelektroden umfassen. Eine Aufnahmepfanne kann eine Schneide, wie oben oder weiter unten beschrieben, umfassen, beispielsweise eine einseitig ausgebildete Schneide. Bei zwei Aufnahmepfannen kann jeweils eine Aufnahmepfanne eine Schneide, wie oben oder weiter unten beschrieben, umfassen, beispielsweise eine einseitig ausgebildete Schneide. Die zwei Aufnahmepfannen können eine Schneide, wie oben oder weiter unten beschrieben, umfassen, beispielsweise eine zweiseitig ausgebildete Schneide. Beispielsweise können die zwei Aufnahmepfannen in entgegengesetzte Richtungen weisen, sodass mit einer Schneide (beispielsweise zweiseitig ausgebildete Schneide) oder mit zwei Schneiden (beispielsweise zwei einseitig ausgebildete Schneiden) zwei Punktschweißelektroden (einer Schweißzange) gleichzeitig bearbeitet werden können.

Ein Elektrodenfräser umfasst ein Elektrodenfräswerkzeug, wie oben oder weiter unten beschrieben, und einen Motor und/oder ein Getriebe zum Antrieb des Elektrodenfräswerkzeugs. Auch können eine zugehörige Steuerung für den Motor und/oder das Getriebe vorgesehen sein, sowie Schaltmittel zum Einschalten bzw. Ausschalten des Motors und/oder des Getriebes.

Außerdem ist es möglich ein Verfahren zum Nachbearbeiten von Punktschweißelektroden durchzuführen, bei dem das Elektrodenfräswerkzeug oder der Elektrodenfräser, wie oben oder weiter unten beschrieben, verwendet wird.

### Kurze Figurenbeschreibung

Die beigefügten Figuren stellen beispielhaft zum besseren Verständnis und zur Veranschaulichung Aspekte und Ausführungsformen der Erfindung dar. Es zeigt:
Figur 1A eine schematische Ansicht einer Schneide, die einseitig ausgebildet ist,
Figur 1B die Schneide von Figur 1A, wobei die Fräskante beschichtet ist,
Figur 1C die Schneide von Figur 1A, wobei die Schneide beschichtet ist,
Figur 2A eine schematische Ansicht einer Schneide, die zweiseitig ausgebildet ist,
Figur 2B die Schneide von Figur 2A, wobei die zwei Fräskanten beschichtet sind,
Figur 2C die Schneide von Figur 2A, wobei die Schneide beschichtet ist,
Figur 3 eine schematische Ansicht einer ersten Ausführungsform einer Schneide mit einer Fräskante, die durch Aussparungen unterbrochen ist,
Figur 4 eine schematische Ansicht einer zweiten Ausführungsform einer Schneide mit einer Fräskante, die durch Aussparungen unterbrochen ist,
Figur 5 eine schematische Ansicht einer dritten Ausführungsform einer Schneide mit einer Fräskante, die durch Aussparungen unterbrochen ist,
Figur 6 eine schematische Seitenansicht einer ersten Ausführungsform eines Elektrodenfräswerkzeuges mit einer zu bearbeitenden Kappe einer Punktschweißelektrode und
Figur 7 eine schematische Seitenansicht einer zweiten Ausführungsform eines Elektrodenfräswerkzeuges mit einer zu bearbeitenden Kappe einer Punktschweißelektrode.

### Ausführliche Beschreibung

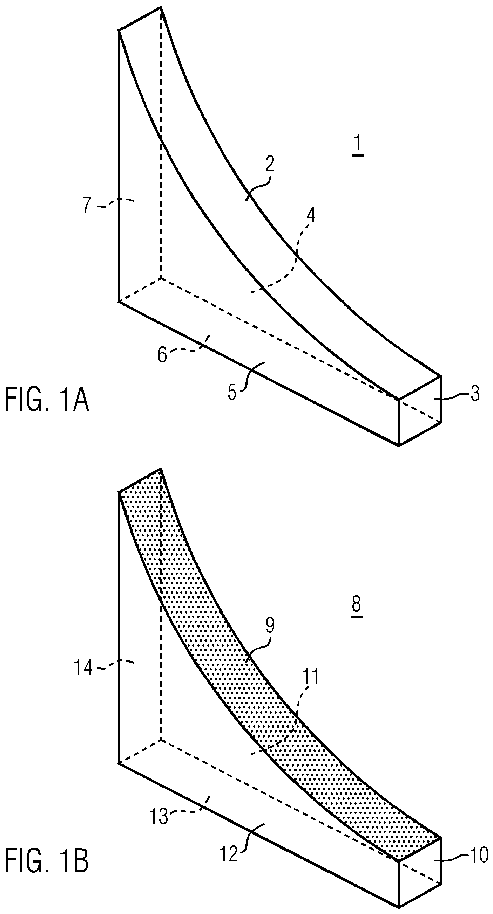

Die Figur 1A zeigt eine schematische Ansicht einer Schneide 1, die einseitig ausgebildet ist. Die Schneide 1 umfasst eine Fräskante 2 und das Schneidenmaterial der Schneide 1 umfasst ein Wolframcarbid-Kobalt-Hartmetall. Abgesehen von der Fräskante 2 umfasst die Schneide 1 zwei Seitenflächen 4, 5, eine erste (längere) Schmalseite 7 und eine zweite (kürzere) Schmalseite 3.

Die Figur 1B zeigt die Schneide von Figur 1A, wobei bei dieser Schneide 8 die Fräskante 9 mit einem Titan-Bor-basierten Schichtwerkstoff beschichtet ist, wie durch die Schraffierung deutlich gemacht wird. Die zwei Seitenflächen 11, 12 der Schneide 8, eine erste (längere) Schmalseite 14 und eine zweite (kürzere) Schmalseite 10 sind nicht beschichtet.

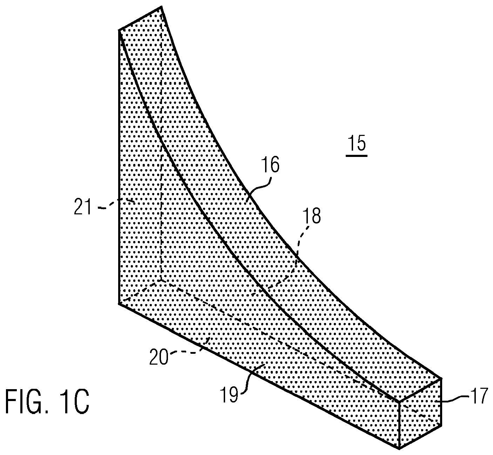

Die Figur 1C zeigt die Schneide von Figur 1A, wobei bei dieser Schneide 15 die Fräskante 9, die zwei Seitenflächen 18, 19, die erste (längere) Schmalseite 21 und eine zweite (kürzere) Schmalseite 16 mit einem Titan-Bor-basierten Schichtwerkstoff beschichtet ist, wie durch die Schraffierung deutlich gemacht wird.

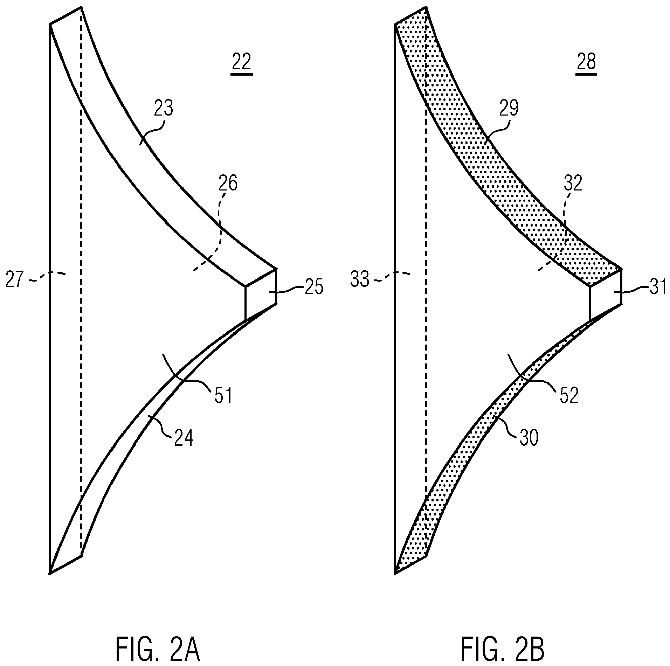

Die Figur 2A zeigt eine schematische Ansicht einer Schneide 22, die zweiseitig ausgebildet ist. Die Schneide 22 umfasst zwei Fräskanten 23, 24, zwei Seitenflächen 26, 51, eine erste (längere) Schmalseite 27 und eine zweite (kürzere) Schmalseite 25. Das Schneidenmaterial der Schneide 22 umfasst ein Wolframcarbid-Kobalt-Hartmetall.

Die Figur 2B zeigt die Schneide von Figur 2A, wobei bei dieser Schneide 28 die zwei Fräskanten 29, 30 mit einem Titan-Bor-basierten Schichtwerkstoff beschichtet sind, wie durch die Schraffierung deutlich gemacht wird. Die zwei Seitenflächen 32, 52 der Schneide 28, die erste (längere) Schmalseite 33 und die zweite (kürzere) Schmalseite 31 sind nicht beschichtet.

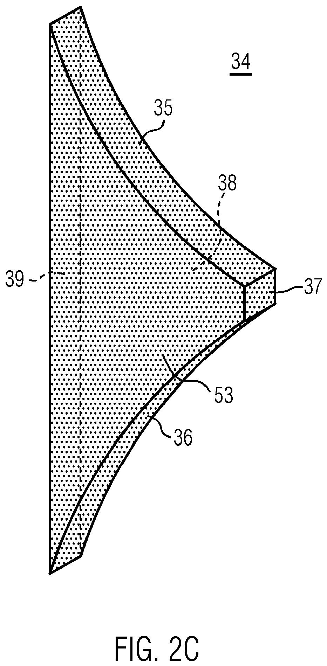

Die Figur 2C zeigt die Schneide von Figur 2A, wobei bei dieser Schneide 34 die zwei Fräskanten 35, 36, die zwei Seitenflächen 38, 53, die erste (längere) Schmalseite 39 und eine zweite (kürzere) Schmalseite 37 mit einem Titan-Bor-basierten Schichtwerkstoff beschichtet ist, wie durch die Schraffierung deutlich gemacht wird.

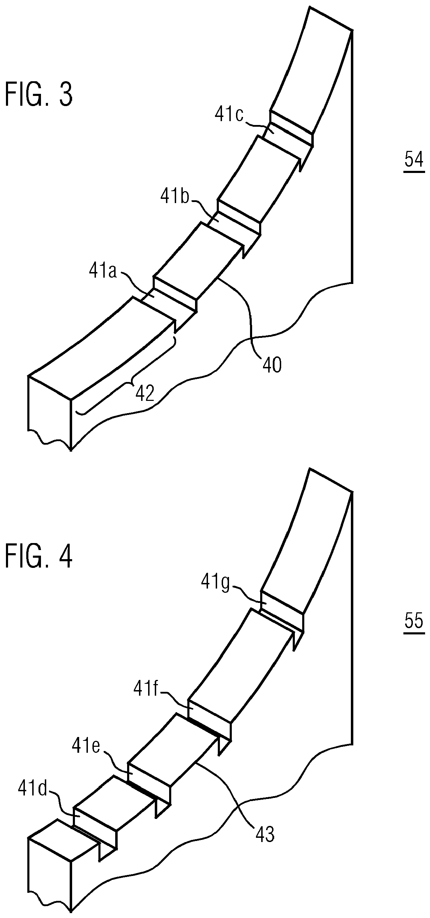

Die Figur 3 zeigt eine schematische Ansicht einer ersten Ausführungsform einer Schneide 54 mit einer Fräskante 40, die durch drei Aussparungen 41a, 41b, 41c unterbrochen ist. Die Aussparungen 41a, 41b, 41c weisen alle dieselben Abmessungen und konstante Abstände zu den jeweils benachbarten Aussparungen auf. Weiter ist in Figur 3 ein Bereich 42 der Fräskante 40 angedeutet, der frei von Aussparungen 41a, 41b, 41c ist. Beispielsweise ist der aussparungsfreie Bereich 42 der Teil der Fräskante 40, der einer Mitte des Elektrodenfräswerkzeuges zugewandt sein kann bzw. der am nächsten an einer Rotationsachse des Elektrodenfräswerkzeuges liegen kann. Das Nichtvorhandensein von Aussparungen im Bereich 42 kann gewährleisten, dass die Kappen der Punktschweißelektroden im Bereich der Spitze möglichst glatt gefräst werden können.

Das Schneidenmaterial der Schneide 54 umfasst ein Wolframcarbid-Kobalt-Hartmetall. Die Fräskante 40 mit den Aussparungen 41a, 41b, 41c oder die Schneide 54 können mit einem Titan-Bor-basierten Schichtwerkstoff beschichtet sein.

Die Aussparungen sind hier und in anderen Figuren mit einem rechteckigen Querschnitt dargestellt. Es sind aber jeweils auch abgerundete oder halbrunde oder andersartig geformte Querschnitte möglich. So kann beispielsweise eine Aussparung einen Querschnitt aufweisen, der aus drei Kreisbogenabschnitten zusammengesetzt ist, sodass zum Beispiel der Querschnitt einer solchen Aussparung in der Mitte konkav und in den Randbereichen konvex geformt ist.

In der Figur 4 eine schematische Ansicht einer zweiten Ausführungsform einer Schneide 55 mit einer Fräskante 43, die durch vier Aussparungen 41d, 41e, 41f, 41g unterbrochen ist. Die Abstände zwischen jeweils benachbarten Aussparungen sind unterschiedlich groß. Durch die Wahl der Abstände kann die lokale Dichte der Aussparungen 41d, 41e, 41f, 41g entlang einer Fräskante 43 festgelegt werden. Die Dichte der Aussparungen 41d, 41e, 41f, 41g kann das Fräsverhalten und die Größe der beim Fräsvorgang entstehenden Späne beeinflussen.

Das Schneidenmaterial der Schneide 55 umfasst ein Wolframcarbid-Kobalt-Hartmetall. Die Fräskante 43 mit den Aussparungen 41d, 41e, 41f, 41g oder die Schneide 55 können mit einem Titan-Bor-basierten Schichtwerkstoff beschichtet sein.

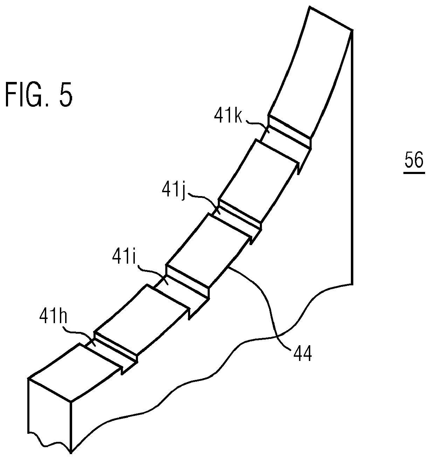

Die Figur 5 zeigt eine schematische Ansicht einer dritten Ausführungsform einer Schneide 56 mit einer Fräskante 44, die durch vier Aussparungen 41h, 41i, 41j, 41k unterbrochen ist. Die Abmessungen der Aussparungen sind teilweise unterschiedlich und zum Teil identisch sind. Die Abmessungen der Aussparungen 41h und 41j sind untereinander gleich und die Aussparungen 41i und 41k untereinander gleich, jedoch sind Aussparungen 41i und 41k größer als die Aussparungen 41h und 41j. Größere Aussparungen können beispielsweise sinnvoll sein, wenn an einer zu bearbeitenden Kappe einer Punktschweißelektrode ein besonders ausgeprägter Wulst zur genaueren Positionierung der Punkschweißelektrode in einem Elektrodenfräswerkzeug entstehen soll.

Das Schneidenmaterial der Schneide 56 umfasst ein Wolframcarbid-Kobalt-Hartmetall. Die Fräskante 44 mit den Aussparungen 41h, 41i, 41j, 41k oder die Schneide 56 können mit einem Titan-Bor-basierten Schichtwerkstoff beschichtet sein.

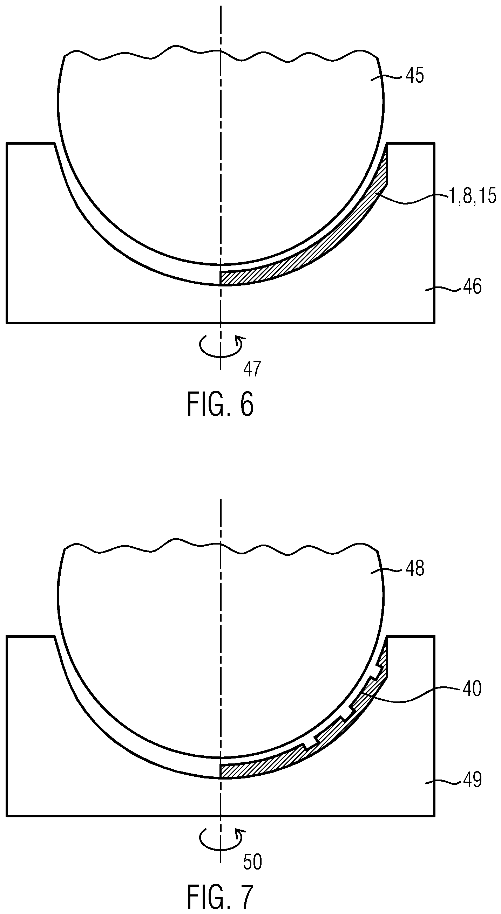

In Figur 6 ist eine schematische Seitenansicht einer ersten Ausführungsform eines Elektrodenfräswerkzeugs mit einer zu bearbeitenden Kappe 45, einer Schneide 1, 8, 15 mit einer Fräskante und einer Rotationsachse 47 des Elektrodenfräswerkzeugs dargestellt. Die Fräskante weist keine Aussparungen auf. Beim Fräsvorgang rotiert das Elektrodenfräswerkzeug um die Kappe 45 der Punktschweißelektrode (die selbst nicht rotiert), sodass die Fräskante Material von der Kappe 45 der Punktschweißelektrode abtragen kann. Die Aufnahmepfanne 46 dient hauptsächlich auf der von Fräskante abgewandten Seite zur Führung der Punktschweißelektrode. Die Rotationsachse 47 des Elektrodenfräswerkzeuges kann mit der Symmetrieachse der Punktschweißelektrode übereinstimmen.

Die Schneide kann eine Schneide 1, 8, 15 der Figuren 1A, 1B oder 1C sein.

In Figur 7 ist eine schematische Seitenansicht einer zweiten Ausführungsform eines Elektrodenfräswerkzeugs mit einer zu bearbeitenden Kappe 48, einer Schneide mit einer Fräskante 40 und einer Rotationsachse 50 des Elektrodenfräswerkzeugs dargestellt. Die Fräskante 40 ist durch exemplarisch drei Aussparungen unterbrochen. Beim Fräsvorgang rotiert das Elektrodenfräswerkzeug um die Kappe 48 der Punktschweißelektrode (die selbst nicht rotiert), sodass die Fräskante 40 Material von der Kappe 48 der Punktschweißelektrode abtragen kann. Die Aufnahmepfanne 49 dient hauptsächlich auf der von Fräskante 40 abgewandten Seite zur Führung der Punktschweißelektrode. Die Rotationsachse 50 des Elektrodenfräswerkzeuges kann mit der Symmetrieachse der Punktschweißelektrode übereinstimmen.

Die Schneide kann eine Schneide der Figuren 3, 4 oder 5 sein.

## Patentansprüche

1. Schneide zum Bearbeiten von Punktschweißelektroden, wobei die Schneide (1, 8, 15, 22, 28, 34, 54, 55, 56) mindestens eine Fräskante (2, 9, 16, 23, 24, 29, 30, 35, 36, 40, 43, 44) zum Bearbeiten einer Punktschweißelektrode umfasst,
**dadurch gekennzeichnet, dass**
ein Schneidenmaterial der Schneide (1, 8, 15, 22, 28, 34, 54, 55, 56) ein Wolframcarbid-Kobalt-Hartmetall umfasst.

2. Die Schneide nach Anspruch 1, wobei das Wolframcarbid-Kobalt-Hartmetall Wolframcarbid in einem Bereich von 85 bis 94 Gewichts-% und Kobalt in einem Bereich von 15 bis 6 Gewichts-% umfasst.

3. Die Schneide nach Anspruch 1 oder 2, wobei eine Korngröße des Wolframcarbid-Kobalt-Hartmetalls in einem Bereich von 0,4 µm bis 2,5 µm liegt.

4. Die Schneide nach einem der Ansprüche 1 bis 3, wobei das Wolframcarbid ein oder mehrere Fremdcarbide bis zu 1 Gewichts-% umfasst.

5. Die Schneide nach einem der Ansprüche 1 bis 4, wobei die mindestens eine Fräskante (9, 16, 29, 30) mit einem Titan-Bor-basierten Schichtwerkstoff beschichtet ist.

6. Die Schneide nach einem der Ansprüche 1 bis 4, wobei die Schneide (15, 34) mit einem Titan-Bor-basierten Schichtwerkstoff beschichtet ist.

7. Die Schneide nach Anspruch 5 oder 6, wobei der Titan-Bor-basierte Schichtwerkstoff mittels eines Hochenergieimpulsmagnetronsputter-Verfahrens, HiPIMS-Verfahrens, auf das Wolframcarbid-Kobalt-Hartmetall aufgebracht wurde.

8. Die Schneide nach einem der Ansprüche 1 bis 7, wobei zumindest eine der mindestens einen Fräskante (40, 43, 44) an einer oder an mehreren Stellen durch eine oder mehrere Aussparungen (41a, 41b, 41c, 41d, 41e, 41f, 41g, 41h, 41i, 41j, 41k) unterbrochen ist.

9. Die Schneide nach Anspruch 8, wobei eine Breite der Aussparungen (41a-41k) im Bereich oberhalb eines Minimalwerts von 30 µm bis 1200 µm und/oder unterhalb eines Maximalwerts von 40 µm bis 1400 µm liegt; und/oder
wobei eine Tiefe (41a-41k) der Aussparungen im Bereich oberhalb eines Minimalwerts von 30 µm bis 300 µm und/oder unterhalb eines Maximalwerts von 40 µm bis 400 µm liegt; und/oder wobei ein Abstand zwischen benachbarten Aussparungen (41a-41k) im Bereich von oberhalb eines Minimalwerts von 0,5 mm bis 9 mm und/oder unterhalb eines Maximalwerts von 1 mm bis 10 mm liegt.

10. Die Schneide nach Anspruch 8 oder 9, wobei alle Aussparungen (41a-41k) einer Fräskante (40, 43, 44) gleiche Abmessungen besitzen, oder wenigstens eine Aussparung (41a-41k) unterschiedliche Abmessungen aufweist als eine andere Aussparung (41a-41k); und/oder
wobei die Abstände zwischen benachbarten Aussparungen (41a-41k) jeweils gleich sind, oder die Abstände zumindest teilweise unterschiedlich sind; und/oder
wobei pro Fräskante (40, 43, 44) eine Anzahl der Aussparungen (41a-41k) mehr als, weniger als oder gleich 1, 2, 3, 4, 5, 6, 7 oder 8 beträgt.

11. Die Schneide nach einem der Ansprüche 8 bis 10, wobei die Aussparungen (41a-41k) einen rechteckigen, abgerundeten oder halbrunden Querschnitt aufweisen.

12. Die Schneide nach einem der Ansprüche 1 bis 11, wobei die Schneide (1, 8, 15, 22, 28, 34) einseitig oder zweiseitig ausgebildet ist.

13. Elektrodenfräswerkzeug zum Bearbeiten von Punktschweißelektroden, wobei das Elektrodenfräswerkzeug mindestens eine Schneide (1, 8, 15, 22, 28, 34, 54, 55, 56) nach einem der Ansprüche 1 bis 12 umfasst.

14. Das Elektrodenfräswerkzeug nach Anspruch 13, weiter umfassend eine oder zwei Aufnahmepfannen (46, 49) für die Punktschweißelektroden.

15. Elektrodenfräser, umfassend ein Elektrodenfräswerkzeug nach Anspruch 13 oder 14 und einen Motor und/oder ein Getriebe zum Antrieb des Elektrodenfräswerkzeugs.
